Europäisches Patentamt

European Patent Office

Office européen des brevets

(11) Veröffentlichungsnummer: **0 411 292 A2**

# (12) EUROPÄISCHE PATENTANMELDUNG

(21) Anmeldenummer: 90111603.8

(51) Int. Cl.5: **F02P 1/08**

(22) Anmeldetag: 20.06.90

(30) Priorität: 29.07.89 DE 3925224
31.05.90 DE 4017478

(43) Veröffentlichungstag der Anmeldung:
06.02.91 Patentblatt 91/06

(84) Benannte Vertragsstaaten:
DE ES FR GB IT SE

(71) Anmelder: **Prüfrex-Elektro-Apparatebau Inh.
Helga Müller, geb. Dutschke**
**Egersdorfer Strasse 36**
**D-8501 Cadolzburg 1(DE)**

(72) Erfinder: **Erhard, Werner**
**Ostlandstrasse 16**
**D-8501 Cadolzburg(DE)**

(74) Vertreter: **Patentanwälte Czowalla . Matschkur
+ Partner**
**Dr.-Kurt-Schumacher-Strasse 23 Postfach
9109**
**D-8500 Nürnberg 11(DE)**

(54) **Zündverfahren, anordnung und anlage für Brennkraftmaschinen mit Magnetgenerator.**

(57) Zündverfahren für Brennkraftmaschinen, insbesondere in Rasenmähern oder Kettensägen, bei dem ein Magnetgenerator für jede Maschinen-Umdrehung eine Mehrzahl Wechselspannungs-Halbwellen induziert, mittels welcher ein Energiespeicherelement aufgeladen und von einem Schaltglied über die Primärspule eines Zündtransformators entladen wird, wobei das Schaltglied betätigt wird, wenn die innerhalb jeder Umdrehung erste Halbwelle eine Triggerschwelle erreicht, sowie Zündanlage für Brennkraftmaschinen, mit einem Magnetgenerator, der abhängig von der Maschinen-Drehstellung eine Lade-Wechselspannung für ein Energiespeicherelement induziert, das von einem synchron zu der Wechselspannung betätigten Zündschalter zum Auslösen der Zündung entladen wird, mit einem Zeitgeber-Modul, das auf die Wechselspannung mit der Erzeugung eines Betätigungs-Sperrsignals für den Zündschalter für die Dauer eines Zeitintervalls anspricht, welches einer Drehzahl-Obergrenze für die Brennkraftmaschine entspricht.

FIG. 3

# ZÜNDVERFAHREN, -ANORDNUNG UND -ANLAGE FÜR BRENNKRAFTMASCHINEN MIT MAGNETGENERATOR

Die Erfindung betrifft ein Zündverfahren für Brennkraftmaschinen, insbesondere in Rasenmähern oder Kettensägen, bei dem ein Magnetgenerator für jede Maschinen-Umdrehung eine Mehrzahl stetig zusammenhängender und abwechselnd polarisierter Spannungs-Halbwellen induziert, mittels welcher ein Energiespeicherelement aufgeladen und von einem Schaltglied über die Primärspule eines Zündtransformators entladen wird. Ferner betrifft die Erfindung eine Kondensator-Zündanlage für Brennkraftmaschinen, mit einem drehzahlabhängig Wechselspannungen induzierenden Magnetgenerator und einer die Wechselspannungen abtastenden Triggereinrichtung zum Betätigen eines den Kondensator über die Primärspule eines Zündtransformators entladenden Schalters; diese Anordnung ist insbesondere zur Durchführung des vorgenannten Verfahrens ausgelegt.

Bei bekannten Zündsystemen etwa der eingangs genannten Art (vgl. US-PS Re. 31 837) ist der innere Schenkel eines dreischenkligen, ferromagnetischen Eisenkerns von einer Spulenanordnung umgeben. Darin erzeugt ein mit der rotierenden Maschinenwelle gekuppeltes Polrad, welches in peripherer Lage einen tangential ausgerichteten Dauermagneten aufweist, eine Folge von alternierenden Spannungshalbwellen. Die ersteren werden zum Auflagen eines Energiespeicherkondensators verwendet und erst die letzte Halbwelle dient zur Ansteuerung eines den Kondensator über den Zündtrafo entladenden Thyristors. In der Praxis stellt man allerdings fest, daß bei dieser Vorgehensweise mit zunehmender Drehzahl die Zündung immer später bezüglich der Absolut-Winkelstellung des Magnetpolrades ausgelöst wird. Erklärungen für diese Erscheinung könnten in den Wirbelstrom- und Hystereseverlusten beim der Zündtriggerung vorausgehenden Ummagnetisieren des Eisenkerns sowie in der Belastung des gesamten Zündsystems durch Kapazitäten und Tiefpaßcharakteristik liegen.

Demgegenüber liegt der Erfindung die Aufgabe zugrunde, mit minimalem Aufwand eine Frühverstellung der Zündung zu erreichen, die mit steigenden Drehzahlen zunimmt. Zur Lösung wird bei einem Zündverfahren mit den eingangs genannten Merkmalen erfindungsgemäß vorgeschlagen, daß das Schaltglied (stets dann) betätigt wird, wenn die innerhalb jeder Umdrehung erste induzierte Halbwelle eine Triggerschwelle erreicht.

Grundsätzlich werden mit zunehmender Maschinendrehzahl bzw. Magnetgenerator-Winkelgeschwindigkeit die Steigungen der induzierten Spannungshalbwellen immer größer. Während der jeweils zweiten, dritten, vierten usw. Halbwelle jedoch machen sich Trägheit und sonstige dynamische Unzulänglichkeiten des Gesamtsystems, u.a. bedingt durch die obengenannten Umstände (Hysterese-, Wirbelstromverluste, Kapazitäten, Tiefpaßverhalten), bemerkbar; jedenfalls läßt sich eine zunehmende Verbreiterung der genannten Halbwellen gegenüber der innerhalb einer Umdrehung auftretenden ersten Halbwelle beobachten. Dennoch wurde bisher immer auf diese zeitlich gedehnten Halbwellen hin die Zündung getriggert, weil zuvor die erste Halbwelle zur Aufladung des Zündkondensators abgewartet und ausgenutzt wurde. Demgegenüber wird nach der Erfindung der unorthodoxe Weg beschritten, gleich die mit jeder Umdrehung erste Halbwelle zur Zünd-Triggerung zu verwenden, ungeachtet des Aufladezustandes des Zündkondensators. Infolgedessen wird bei der ersten Maschinenumdrehung mangels Energie im Kondensator keine Zündung ausgelöst. Erst mit der ersten Halbwelleninduktion innerhalb der zwei ten Umdrehung der Maschine wird das Schaltglied zur Entladung des Energiespeicherelements angesteuert, welches zuvor von den Halbwellen der ersten Umdrehung aufgeladen wurde. Dieser Vorgang wiederholt sich bei den weiteren Umdrehungen entsprechend.

Zweckmäßigerweise wird der ansteigende Teil bzw. die ansteigende Flanke der ersten Halbwelle zur Betätigung des Schaltglieds und zur Zündung verwendet. In Weiterbildung des erfindungsgemäßen Verfahrens wird wenigstens eine der der ersten Halbwelle nachfolgenden Halbwellen in Bezug auf die Betätigung des Schaltglieds gesperrt. Dadurch läßt sich sicherstellen, daß eine Triggerung der Zündung nicht mehrmals innerhalb einer Maschinenumdrehung erfolgt.

Da an sich bekannte Magnetgeneratoren in der Regel eine Folge mehrerer Spannungshalbwellen induzieren, wird das steuerungstechnische Problem aufgeworfen, die Triggerung der Zündung gerade auf die innerhalb einer Umdrehung erste Halbwelle hin ansprechen zu lassen. Dem wird erfindungsgemäß dadurch begegnet, daß ein Flag vorgesehen wird, welches mit der letzten Halbwelle jeder Umdrehung derart gesetzt wird, daß es die Freigabe der Zündung signalisiert. Das Flag stellt ein spezielles Zeichen dar, das das Auftreten eines bestimmten Ereignisses signalisiert, hier nämlich Beendigung der letzten Halbwelle der laufenden Umdrehung bzw. die kommende erste Halbwelle der nächsten Umdrehung. Diese Erfindungsausbildung läßt sich besonders leicht auf Mikroprozessoren implementieren, da diese meist interne Register für Merker- oder Zustandsbits aufweisen. Mit Vorteil wird das Flag nach der Zündungsauslösung wenigstens mit der zweiten Halbwelle jeder Umdrehung zurückgesetzt, was ein Sperren der Zündung bedeutet. Damit wird erreicht, daß auch dann keine Zündung zum falschen Zeitpunkt ausgelöst wird, wenn das elektromagnetische Feld eines Zündfunkens das elektronisch realisierte Flag in der (Mikroprozessor)Schaltung ungewollt verändert hat.

Eine Kondensator-Zündanordnung mit den eingangs genannten Merkmalen, welche insbesondere zur Durchführung des erläuteren Verfahrens geeignet ist, ist erfindungsgemäß mit einem bistabilen Kippschaltwerk versehen, welches aufgrund der letzten Wechselspannungs-Halbwelle innerhalb jeder Maschinen-Umdrehung in einen Zustand zur Freigabe der Betätigung des Entladeschalters während der ersten Halbwelle der nächsten Umdrehung gekippt wird. Zweckmäßigerweise wird der letzte Teil der letzten Halbwelle, also deren Ablauf bzw. Ende dazu benutzt, das Kippschaltwerk in den Freigabezustand zu setzen.

Digitale Schaltwerke wie Kippstufen sind empfindlich gegen elektromagnetische Einstreuungen, welche zur Verfälschung des Schaltzustands führen können. Diesem Problem wird mit einer Ausbildung der Erfindung begegnet, nach der das Kippschaltwerk innerhalb jeder Umdrehung aufgrund der zweiten und gegebenenfalls weiterer nachfolgenden Halbwellen gleicher Polarität in seinen ursprünglichen Ausgangszustand zurückgekippt wird und dabei die Betätigung des Schalters sperrt. Erst mit der letzten Halbwelle der laufenden Umdrehung, welche voraussetzungsgemäß entgegengesetzte Polarität aufweist, wird das Kippschaltwerk zur Zündungsfreigabe wieder gesetzt. Hierdurch werden Fehlzündungen vermieden.

Dieses periodische Rücksetzen des Kippschaltwerkes ist besonders dann von Vorteil, wenn - nach einer weiteren Ausbildung der Erfindung - dieses als ein einflankengetriggertes Toggle-Flip-Flop ausgebildet ist, das innerhalb jeder Umdrehung aufgrund der zweiten und gegebenenfalls folgender Halbwellen gleicher Polarität zurückgesetzt wird, und auf dessen dynamischen Takteingang die erste und gegebenenfalls folgende Halbwellen gleicher entgegengesetzter Polarität einwirken. Toggle-Flip-Flops invertieren bekanntlich ihren Ausgangszustand mit jeder z. B. positiven Taktflanke (vgl. Tietze-Schenk "Halbleiterschaltungstechnik", 8. Auflage, Springer-Verlag, S. 237). Wird durch eine externe Störung ein unerwünschtes Umkippen des Flip-Flops verursacht, kann sich dies aufgrund der genannten vorsorglichen Rücksetzung, vor allem wenn diese vor der letzten Halbwelle einer Umdrehung erfolgt, nicht in eine Falschzündung auswirken.

Mit Vorteil ist das Kippschaltwerk mit einem Kurzschluß-Schalter dergestalt verbunden, daß es im zurückgekippten Ausgangszustand den Kurzschlußschalter zur Unterdrückung von induzierten Trigger-Halbwellen entsprechend ansteuert. Die dadurch erzielte Vermeidung von zusätzlichen, überflüssigen Zündungen, vor allem wenn sich die Maschine in einer hierfür ungeeigneten Drehstellung befindet, braucht nicht näher erläutert zu werden. In der Praxis hat es sich als zweckmäßig erwiesen, dem Ausgang des Kippschaltwerks und dem Eingang des Kurzschluß-Schalters ein Verzögerungsglied, z. B. in Form eines RC-Tiefpasses zwischenzuschalten. Dadurch wird ein Nacheilen des Schließens oder Öffnens des Kurzschluß-Schalters erreicht, um unerwünschte Auswirkungen durch zeitlich verzögerte, induzierte Halbwellen zu kompensieren.

Zur leichteren Realisierung des erfindungsgemäßen Zündsystems (Verfahren, Anordnung) ist anzustreben, daß der Magnetgenerator eine möglichst geringe Anzahl von Spannungshalbwellen induziert, da ohnehin nur die erste Spannungshalbwelle der Zünd-Triggerung dient und die nachfolgenden Halbwellen zum Setzen und/oder Zurücksetzen des Flags- bzw. Kippschaltwerks verwendet werden müssen. Dem dient es, wenn das erfindungsgemäße System mit einem an sich bekannten Magnetgenerator (vgl. DE-OS 36 08 740) kombiniert wird, der ein mit der Maschinenumdrehung gekoppeltes Magnet-Polrad mit tangential versetzten Polen und eine damit zusammenwirkende, stationäre angeordnete Spulenanordnung mit ferromagnetischem Eisenkern aufweist. Mit besonderem Vorteil ist der Gedanke dadurch konkretisiert, daß der Eisenkern zwei zum Polrad gerichtete Schenkel aufweist, von denen lediglich einer von der Spulenanordnung umgeben ist, die vor allem eine Ladespule für den Zündkondensator und eine Triggerspule zum Ableiten von die Zündung triggernden Impulsen umfaßt. Mit dieser Magnetgeneratorausbildung werden pro Umdrehung eine erste positive, eine zweite negative und eine dritte posititve Trigger-Halbwelle induziert. Die überraschend vorteilhafte Wirkung im Zusammenhang mit dem zuvor skizzierten Erfindungssystem beruht auf dem Beginn und das Ende jedes Halbwellen-Zykluses jeweils mit einer positiven Halbwelle: die erste Halbwelle kann - ab der zweiten Maschinenumdrehung - stets auf die noch im Eisenkern vorhandene Restmagnetisierung aufbauen, die nach der letzten Halbwelle gleicher Polarität noch verblieben ist; dies ergibt eine besonders steile Anfangsflanke für die erste Halbwelle, da keinerlei Ummagnetisierung im Eisenkern mehr notwendig ist. Praktische Versuche haben ergeben, daß hierbei eine Frühverstellung der Zündung zwischen 400 U/min und 1 2000 U/min bis zu 30° möglich ist. Der mittleren, zweiten Halbwelle entgegengesetzter Polarität läßt sich die bereits erwähnte Sicherheitsfunktion zuordnen, nämlich Störungen des Flags- oder Kippschaltwerks durch dessen Rücksetzung zu kompensieren.

Eine weitere Ausbildung der Erfindung, die im Zusammenhang mit der minimalen Anzahl induzierter Halbwellen von Vorteil ist besteht darin, daß die Stromversorgung des Kippschaltwerks von der ersten und gegebenenfalls folgenden Halbwellen abhängt. Bei drei Halbwellen pro Umdrehung gemäß oben erläutertem Beispiel bedeutet dies, daß das Kippschaltwerk während dem größten Teil der Maschinenumdrehung inaktiviert ist und infolgedessen keine Falsch-Zündungen hervorrufen kann.

Schließlich betrifft die Erfindung eine Zündanlage für Brennkraftmaschinen, mit einem Magnetgenerator, der abhängig von der Maschinendrehstellung eine Lade-Wechselspannung für ein Energiespeicherelement induziert, das von einem im Gleichlauf zu der Wechselspannung betätigten Zündschalter vorzugsweise über die Primärspule eines Zündtransformators entladen wird.

Bei den zuvor erläuterten Zündsystemen (Verfahren und Anordnung) ist vor allem einer mit steigender Drehzahl zunehmenden Frühverstellung der Zündung Rechnung getragen. Bei Brennkraftmaschinen, die z.B. in Rasenmähern oder Kettensägen eingesetzt sind, besteht darüberhinaus noch das Bedürfnis, die Überschreitung einer Oberdrehzahlgrenze zu verhindern.

Zur Lösung des Problems der Drehzahlbegrenzung wird bei einer Zündanlage mit den zuvor genannten Merkmalen erfindungsgemäß vorgeschlagen, ein Zeitgebermodul vorzusehen, das auf die Wechselspannung mit der Erzeugung eines Betätigungs-Sperrsignals zu den Zündschalter reagiert, wobei es das Sperrsignal während eines Zeitintervalls aktiv hält, welches im Hinblick auf eine Drehzahl-Obergrenze für die Brennkraftmaschine gewählt ist.

Periodisch mit jeder Maschinen-Umdrehung wird bei einer bestimmten Drehstellung eine Folge von Wechselspannungshalbwellen ausgelöst (wie z.B. in der eingangs genannten älteren Fundstelle beschrieben), welche dem Aufladen des Energiespeicherelements und/oder dem Triggern der Zündung über den das Energiespeicherelement entladenden Zündschalter dienen. Aufgrund des Auftretens der Wechselspannung wird gleichzeitig das Zeitgebermodul aufgesetzt bzw. gestartet zur Generierung einer voreingestellten konstanten Zeitspanne. Mit steigender Drehzahl wird die Periode, mit der die Wechselspannung regelmäßig auftritt, kürzer, die vom Zeitgeber generierte Zeitspanne jedoch bleibt konstant. Unterschreitet die Periode für das regelmäßige Auftreten der Wechselspannung die generierte Zeitspanne, wird eine Zündung aufgrund des vom Zeitgeber ausgegebenen Sperrsignals an den Zündschalter unterbunden, so daß eine weitere Drehzahlerhöhung nicht mehr möglich ist. Erst nach Ablauf einer generierten Zeitspanne inaktiviert der Zeitgeber das Sperrsignal, wodurch weitere Zündungen wieder freigegeben sind. Diese erfolgen mit erneutem Autreten von induzierter Wechselspannung und gleichzeitig wird der Zeitgeber zur erneuten Generierung der voreingestellten Zeitspanne bzw. -dauer unter zeitgleichem Setzen des Sperrsignals gestartet.

In Weiterbildung dieses erfindungsgemäßen Zündsystems eignen sich zur Realisierung des Zeitgebers an sich bekannte und auf dem Markt kostengünstig erhältliche Baukomponenten wie Vorwahlzähler, Zeitschalter oder Monoflops, die jeweils so beschaltet sind, daß sie mittels der Wechselspannung in ihren Ausgangs- bzw. Startzustand rücksetzbar sind. Andererseits liegt es auch im Rahmen der Erfindung, den Zeitgeber softwaremäßig zu realisieren, nämlich in einem Mikrocomputer als Software-Routine zu implementieren, was vorzugsweise unter Einsatz eines an sich bekannten program mierbaren Zählerbausteins erfolgen kann; um dabei das mit der Wechselspannung synchronisierte Rücksetzen bzw. Starten des Zeitgebers durch den Mikrocomputer zu ermöglichen, sind für diesen noch an sich bekannte Sensormittel (Schwellwert-Komperatoren, AD-Wandler) zum Erfassen des Auftretens der Wechselspannung anzuordnen.

Beim Synchronisieren des Betriebs des Zeitgebers mit der Wechselspannung stellt sich das Problem, diese dem Zeitgeber zum Erfassen geeignet aufzubereiten und/oder zur Signalerfassung zu formen. Zur Lösung wird in Weiterbildung der Erfindung ein Anpaßmodul bzw. -netzwerk vorgeschlagen, mittels welchem pro Maschinenumdrehung eine oder mehrere Wechselspannungs-Halbwellen selektiert, gegebenenfalls gleichgerichtet und/oder invertiert und dem Zeitgeber in dessen Rücksetzeingang zugeführt werden.

Mit Vorteil durchläuft jede Halbwelle auf ihrem Weg zum Start- bzw. Rücksetzeingang des Zeitgebers wenigstens ein Laufzeitglied, das eine Zeitverzögerung entsprechend der Mindest-Betätigungszeit des Zündschalters realisiert. Der erzielte Vorteil besteht darin, daß nicht betriebsgerechtes Start- bzw. Rücksetzen des Zeitgebers und damit verbunden zu frühes Ausschalten des Zündschalters weitgehend verhindert ist: vom Zündvorgang her rührende Störspikes können erst den Zeitgeber neu zum Sperren der Zündung aufsetzen, wenn das Energiespeicherelement für die Zündung ausreichend entladen worden ist, wofür der Zündschalter eine Mindestzeit benötigt. Mithin dient das Vorsehen von Laufzeitgliedern der Erhöhung der Zünd- und Betriebssicherheit.

Um in Zusammenhang mit Laufzeitgliedern im niedrigen oder mittleren Drehzahlbereich gleichwohl eine schnelle, praktisch unverzögerte Zündung zu gewährleisten, ist nach einer Weiterbildung vorgesehen, daß pro Maschinen-Umdrehung wenigstens eine Halbwelle, vorzugsweise die erste Halbwelle der Wechselspannung, dem Zeitgeber zusätzlich unter logischer UND-Verknüpfung mit dessen Sperrsignal-Ausgang zugeführt wird. Hat der Zeitgeber wegen Ablauf der von ihm generierten Zeitdauer das Sperrsignal zurückgenommen, wird die von der Wechselspannungs-Halbwelle resultierende Information im Zuge der UND-Verknüpfung mit logisch "Null" gewichtet bzw. bewertet, so daß der Zeitgeber nicht neu gestartet bzw. das Sperrsignal für den Zündschalter nicht neu gesetzt wird. Läuft die Brennkraftmaschine im Bereich der oberen Drehzahlgrenze, werden von Halbwellen resultierende Informationen mit logisch "Eins" gewichtet bzw. bewertet, so daß der Start- bzw. Rücksetzeingang des Zeitgebers und damit das Sperrsignal umgehend neu aktiviert werden.

Erzeugt der Magnetgenerator pro Maschinenumdrehung mehr als zwei Halbwellen, werden insbesondere aufgrund von Hysterese-Verlusten die Zeitabstände zwischen der zweiten und den nachfolgenden Halbwellen größer als zwischen der ersten und der zweiten Halbwelle. Diese Erscheinung prägt sich besonders im niederen bzw. unteren Drehzahlbereich der Brennkraftmaschine aus. Um den genannten größeren Zeitabstand zu überbrücken, ist nach einer vorteilhaften Erfindungsweiterbildung ein Speicherelement, beispielsweise ein Flipflop, vorgesehen, welches ein den Zeitgeber zu dessen Rücksetzen zugeführtes Merksignal speichert, wobei es von einer Halbwelle geladen und von einer anderen - entweder vorausgehenden oder nachfolgenden - Halbwelle gelöscht wird. Hierdurch wird die von der zweiten und gegebenenfalls nachfolgenden Halbwellen resultierende Rücksetzinformation für den Zeitgeber solange festgehalten, bis die unmittelbar benachbarte Halbwelle eintrifft; dabei wird während des Zeitabstands zwischen den beiden aufeinanderfolgenden Halbwellen der Zeitgeber stets im Rücksetz- bzw. Startzustand gehalten, so daß das Sperrsignal unterdrückt bleibt und die Zündung sich frei entfalten kann.

Zur Erzielung einer kompakten Bauweise im Hinblick auf den Einsatz in kleinen Brennkraftmaschinen ist es von Vorteil, wenn nach einer Weiterbildung der Erfindung das Anpaßmodul - gegebenenfalls einschließlich der Laufzeitglieder, UND-Gatter und/oder des Speicherelements - mit dem Zeitgeber baulich zu einem integrierten Schaltkreis zusammengefaßt ist. Um auch den Einsatz "vor Ort", wo keine Möglichkeit des Netzanschlusses existiert, zu ermöglichen, besteht eine andere zweckmäßige Weiterbildung darin, daß zur Stromversorgung des Zeitgeber- und/oder gegebenenfalls Anpaßmoduls oder integrierten Schaltkreises ein weiteres Energiespeicherelement angeordnet ist, das über die vom Magnetgenerator induzierte Wechselspannung aufgeladen wird. Da hierdurch die Maschinen-Drehleistung indirekt zur Stromerzeugung verwendet wird, ist ein besonderes Batterieelement nicht mehr notwendig.

Bei der Synchronisation von Zeitgeber-Betrieb und induzierter Wechselspannung erhebt sich das Problem, die Wechselspannung bzw. deren Halbwellen in für den Zeitgeber auswertbare Signale umzuformen, welche zum Einsatz an sich bekannter Digitaltechnologie gegenüber Bezugspotential unipolar sind. Unter diesem Gesichtspunkt besteht eine Ausbildung der Erfindung darin, daß dem Anpaßmodul Wechselspannungs-Halbwellen zugeführt werden, die von sowohl dem einen Pol als auch dem entgegengesetzten Pol einer Induktionsspule abgegriffen werden. Damit erhalten die in der Induktionsspule mit entgegengesetzten Vorzeichen induzierten Spannungen gegenüber dem Anpaßmodul bzw. dessen Bezugspotential übereinstimmende Richtungen. Alternativ kann die negative Wechselspannungs-Halbwelle dem Anpaßmodul über einen Inverter beispielsweise in Form eines pnp-Transistors in Emitterschaltung zugeführt werden.

Damit der Zeitgeber über sein Sperrsignal auf den Zündschalter einwirken kann, ist nach einer Weiterbildung der Erfindung dem Zeitgeber ein Sperrschaltglied nachgeordnet, das bei Ansteuerung bzw. Betätigung durch das Sperrsignal dem Betätigungseingang des Zündschalters gegen Masse kurzschließt. Gelangt dann Wechselspannung an den Betätigungseingang, so wird auch diese kurzgeschlossen und kann so keine Zündung auslösen.

Soll, bevor die Drehzahlbegrenzung durch den Zeitgeber einsetzt, noch eine Spätverstellung der Zündung gegenüber einer Bezugs-Drehstellung der Maschine (z. B. oberer Totpunkt) erfolgen, kann dies im Rahmen der Erfindung wie folgt realisiert werden: dem Ansprech-, Start-, gegebenenfalls Rücksetzeingang des Zeitgebers wird unmittelbar ein Verzögerungsmodul beispielsweise in Form eines RC-Tiefpasses vorgeschaltet; dessen die Verzögerung realisierende Zeitkonstante ist im Hinblick auf die gewünschte Spätverstellung des Zündzeitpunkts gewählt und wirkt sich unmittelbar im Bereich der Drehzahl-Obergrenze der Maschine aus. In diesem Bereich ist bei Auftreten von Wechselspannung die vom Zeitgeber generierte Zeitdauer bzw. Wartezeit bis auf eine kleine Restzeit bereits abgelaufen; das Verzögerungsglied verzögert den Eingang eines Rücksetz- bzw. Startsignals in den Zeitgeber jedoch über die Restzeit hinaus, so daß noch eine spätverstellte Zündung erfolgen kann.

Mit Vorteil ist für das Zeitgeber-Modul ein Impuls- oder Taktgenerator als Zeitreferenz vorgesehen, dessen Takt-oder Impulsausgang nach einer logischen UND-Verknüpfung mit dem Sperrsignal des Zeitgebermoduls einer zugehörigen Zähleinrichtung zugeführt wird. Insbesondere wenn das Zeitgeber-Modul mittels eines Zählerbausteins realisiert ist, kann das davon erzeugte Sperrsignal auch den Eingang der zu zählenden Impulse aus dem Taktgenerator verhindern, indem das als Torschaltung zum Zählereingang dienende UND-Gatter gesperrt wird.

Zur Stabilisierung der Leerlaufdrehzahl der Brennkraftmaschine ist eine Verminderung der Frühverstellung des Zündzeitpunkts (vgl. eingangs genannte Fundstelle) vorteilhaft. In dieser Hinsicht besteht eine erfindungsgemäße Weiterbildung darin, daß das Zeitgeber-Modul auf die Wechselspannung mit der Erzeugung eines weiteren separaten Verzögerungssignals zur verzögerten Betätigung des Zündschalters reagiert; dieses Verzögerungssignal wird für die Dauer eines zweiten längeren Zeitintervalls erzeugt, das einer Drehzahl-Untergrenze, vorzugsweise der Leerlaufdrehzahl, der Maschine entspricht. Dadurch wird bei der Drehzahl-Untergrenze, insbesondere Leerlaufdrehzahl für die Zündverstellkurve der Brennkraftmaschine ein Einbruch erzeugt, der sich vorteilhaft auf die Stabilität im Leerlauf auswirkt. Die verzögerte Betätigung des Zündschalters läßt sich vorteilhaft durch ein Verzögerungsglied realisieren, das vom Verzögerungssignal des Zeitgebers aktiviert wird. Die induzierte Wechselspannung wird dann über das Verzögerungsglied, beispielsweise ein RC-Tiefpaß, dem Betätigungseingang des Zündschalters zu dessen Triggerung verzögert zugeführt.

Insbesondere wenn das Zeitgeber-Modul auf der Basis eines Vorwahl-Zählerbausteins realisiert ist, muß die Vorwahlzahl, bei dessen Erreichen das Verzögerungssignal erzeugt wird, höher sein als die Vorwahlzahl für das Sperrsignal.

Deshalb darf das Zeitgeber-Modul, insbesondere der Zählerbaustein, beim Zählen nicht angehalten werden, wenn die Vorwahlzahl für das Sperrsignal erreicht ist. Dem trägt eine Erfindungsweiterbildung dadurch Rechnung, daß der Takt- oder Impulsausgang des genannten Takt- oder Impulsgebers ausschließlich mit dem Verzögerungssignal UND-verknüpft ist.

Weitere Merkmale, Einzelheiten und Vorteile der Erfindung ergeben sich aus der nachfolgenden Beschreibung bevorzugter Ausführungsbeispiele der Erfindung sowie anhand der Zeichnung. Darin zeigen:

Fig. 1 eine für die Erfindung vorteilhafte Ausführung des Magnetgenerators in axialer Ansicht,
Fig. 2 eine schaltungstechnische Realisierung der Erfindung,
Fig. 3 Spannungs-Zeit-Diagramme bezüglich vom Magnetgenerator induzierter Spannungshalbwellen sowie von Ein- und Ausgangssignalen eines erfindungsgemäß verwendeten Kippschaltwerks,
Fig. 4 eine weitere schaltungstechnische Realisierung der Erfindung,
Fig. 5 eine weitere schaltungstechnische Realisierung der Erfindung,
Fig. 6 anhand der Impulsdiagramme a)-c) die Funktionsweise der Schaltungen nach Figur 4 und/oder Figur 5,
Fig. 7 eine weiter abgewandelte schaltungstechnische Realisierung der Erfindung, und
Fig. 8 die aus der Schaltungsvariante nach Fig. 7 resultierende Zündeverstellkurve für den Betrieb der Brennkraftmaschine.

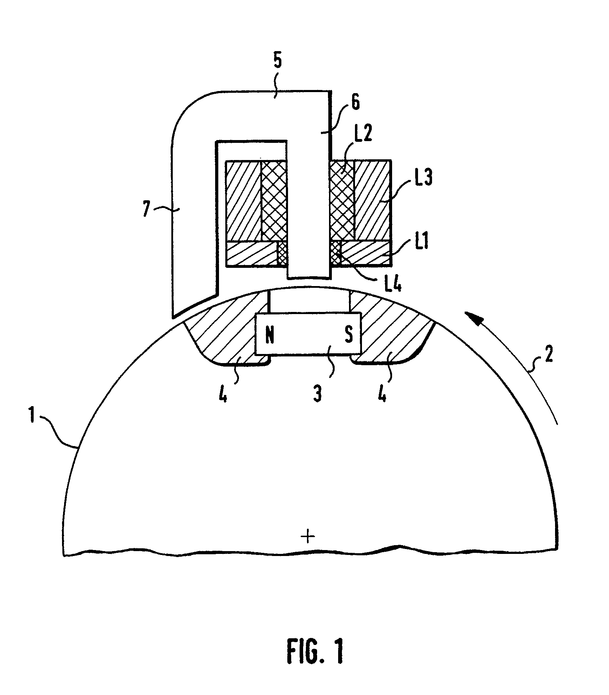

Der in Fig. 1 dargestellte Magnetgenerator weist ein Polrad 1 auf, welches von der (nicht dargestellten) Maschine in Drehrichtung 2 entgegen dem Uhrzeigersinn rotiert wird. An dessen äußeren Umfang ist ein Dauermagnet 3 mit tangential versetzten Polen N, S angeordnet, welche entsprechend angeordnete Polschuhe magnetisieren. Diese Magnetanordnung 3, 4 wird bei Drehung 2 an einen ferromagnetischen Eisenkern 5 mit U-Profil vorbeibewegt, dessen erster Schenkel 6 von einer Spulenanordnung L1, L2, L3, L4 umgeben ist, und dessen zweiter Schenkel 7 keine Spulen aufweist. Die Spulenanordnung besteht aus vier zum ersten Schenkel 6 konzentrisch angeordneten Spulen L1 bis L4. Deren Funktion wird aus den Erläuterungen anhand der weiteren Figuren mit Schaltungsanordnungen und Signal/Zeitdiagrammen ersichtlich.

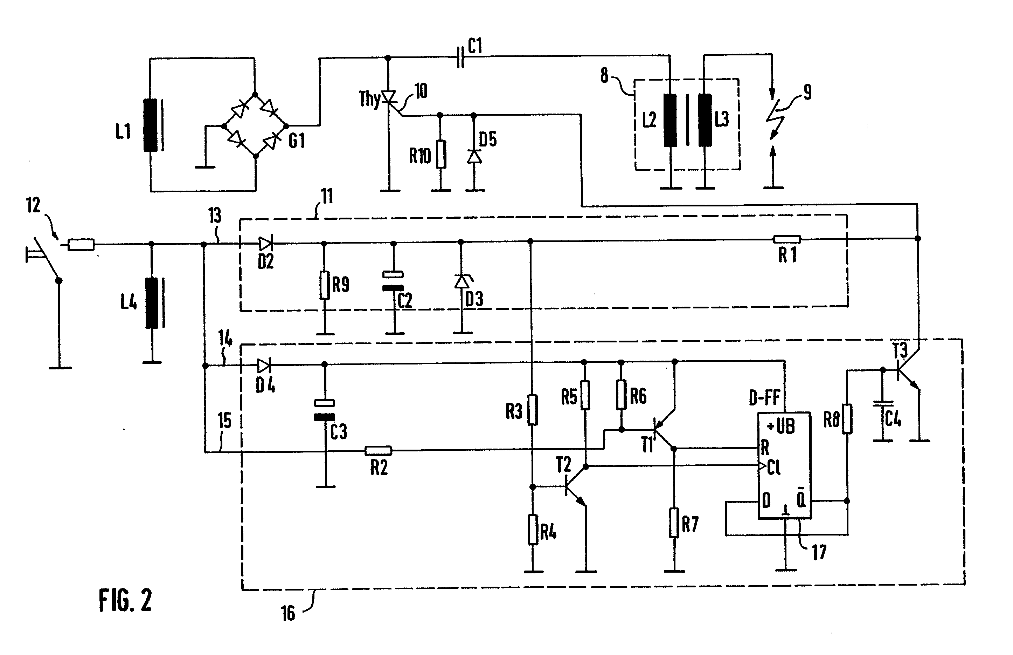

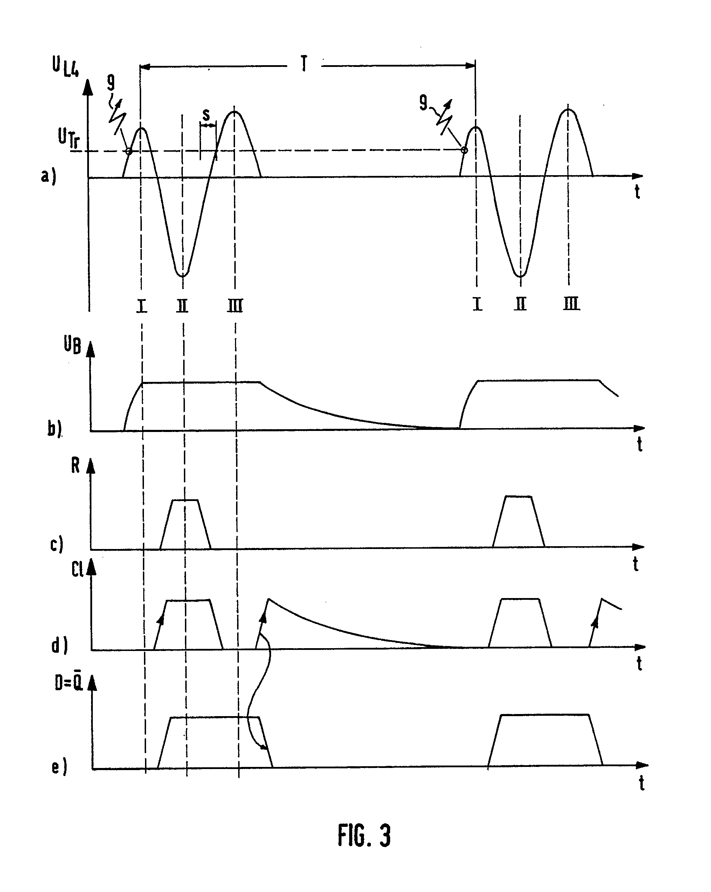

Gemäß Fig. 2 lädt die erste Ladespule L1 über einen Vollweggleichrichter G1 in beispielsweise Graetz-Schaltung einen Zünd-Kondensator C1 auf. Die zweite Spule L2 bzw. dritte Spule L3 bilden zusammen die Primär- bzw. Sekundärwicklung eines Zündtransformators 8. Die Primärspule L2 liegt in Serie mit dem Zündkondensator C1, bei dessen Entladung über einen im Beispiel als Thyristor ausgeführten Schalter Thy am Ausgang des Zündtransformators 8 ein Hochspannungs-Zündsignal 9 entsteht. Der Steuer- bzw. Betätigungseingang 10 des Schalters Thy ist mit dem Ausgang einer (gestrichelt angedeuteten) Trigger-Einrichtung 11 verbunden, der eine vierte Spule L4 als Trigger-Spule zugeordnet ist. Ferner sind dem Steuereingang 10 des Schalters Thy ein Schutzwiderstand R10 und eine Schutzdiode D5 jeweils parallel gegen Masse geschaltet. In der Spulenanordnung L1 bis L4 werden in an sich bekannter weise stetig zusammnenhängende und wechselnd polarisierte Spannungshalbwellen, wie in Fig. 3, Diagramm a, dargestellt, erzeugt. Der Triggerspule L4 ist ein Ausschalter 12 parallel gegen Masse geschaltet, der bei Betätigung die Triggerspule L4 kurzschließt. Zwischen der Triggerspule L4 und dem Steuereingang 10 des Schalters Thy sind eine lediglich positive Halbwellen durchlassende Diode D2 sowie ein Strombegrenzungswiderstand R1 seriell angeordnet. Zwischen dieser Diode D2 und dem Strombegrenzungswiderstand R1 ist eine Parallelschaltung bestehend aus dem Widerstand R9, dem gepolten Kondensator C2 und der Zener-Diode D3 gegen Masse gelegt. Dieses parallel geschaltete Netzwerk dient einerseits der Glättung von aus der Triggerspule L4 herrührenden Impulsen und andererseits der Spannungsstabilisierung.

Am Ausgang der Triggerspule L4 liegen ferner - parallel zum Eingang 13 der Triggereinrichtung 11 geschaltet - zwei Eingänge 14, 15 eines Kippschaltwerkes 16. Dessen Kern bildet ein als integrierter Schaltkreis ausgeführtes Daten-Flip-Flop 17 mit positiv flankengetriggertem Takteingang Cl, welches aufgrund der Rückkopplung seines invertierenden Ausgangs Q zu seinem Dateneingang D als Toggle-Element betrieben wird. Die Spannungsversorgung am Eingang $U_B$ des Flip-Flops 17 wird vom ersten Eingang 14 des Kippschaltwerks 16 wie folgt abgeleitet: über eine lediglich die positiven Spannungshalbwellen aus der Triggerspule L4 durchlassende Diode D4 wird ein gepolter Kondensator C3 gegen Masse aufgeladen; dieser stellt dann die Versorgungsspannung $U_B$ für das Flip-Flop 17 bereit. An dessen Takteingang Cl liegt der Ausgang eines invertierenden Schaltelementes gebildet aus einem npn-Transistor T2 in Emitterschaltung, dessen Kollektor über den Kollektorwiderstand R5 auf dem Stromversorgungspotential des Flip-Flops 17 bzw. des Stromversorgungskondensators C3 liegt. Das Steuer- bzw. Basissignal des Transistors T2 wird über einen zwischen Masse und der Zener-Diode D3 der Triggereinrichtung 11 geschalteten Spannungsteiler R3, R4 zugeführt.

Der Reset-Eingang R des Flip-Flops 17 ist mit dem Ausgang eines weiteren invertierenden Schaltelements aus dem pnp-Transistor T1 in Emitterschaltung mit nach Masse gelegtem Kollektorwiderstand R7 verbunden. Der Steuer- bzw. Basiseingang dieses pnp-Transistors T1 wird über einen Spannungsteiler R2, R6 angesteuert, welcher an seinem einen Ende mit dem Ausgang der Triggerspule L4 und an seinem anderen Ende mit der Stromversorgung aus dem Stromversorgungskondensator C3 verbunden ist. Dessen Stromversorgungspotential ist dem Emitter des pnp-Transistors T1 zugeführt.

Der invertierende Ausgang Q des Flip-Flops 17 steuert über einen verzögernden RC-Tiefpaß R8, C4 einen durch einen Transistor T3 in Emitterschaltung realisierten Kurzschluß-Schalter an, welcher dann den Ausgang bzw. Steuereingang 10 des Schalter Thy nach Masse kurzschließt.

Wegen der Wirkungsweise dieses Ausführungsbeispiels eines erfindungsgemäßen Zündsystems wird auf die Signal-Zeitdiagramme a) bis e) in Fig. 3 verwiesen:

Gemäß Diagramm a) wird beim Vorbeibewegen des Nordpols N des Dauermagneten 3 am ersten mit der Spulenanordnung einschließlich der Triggerspule L4 bewickelten Schenkel 6 des U-Eisenkerns 5 u. a. in der Triggerspule L4 eine Spannungshalbwelle I positiver Polarität induziert. Nach Verlassen des ersten Schenkels 6 bewegt sich der Nordpol N aufgrund der Drehung 2 des Polrads 1 am zweiten nicht bewickelten Schenkel 7 vorbei, während der Südpol S am ersten Schenkel 6 vorbeibewegt wird. Dies führt zu einer vollständigen Ummagnetisierung des Eisenkerns 5, woraufhin die zweite Spannungshalbwelle II entgegengesetzter Polarität und höherer Amplitude entsteht. Verläßt der Nordpol N mit weiterer Drehung 2 den Bereich des zweiten Schenkels 7, den dann der Südpol S des Dauermagneten 3 entsprechend magnetisiert, wird wieder eine Änderung des magnetischen Flusses durch die Spulenanordnung hervorgerufen; es wird also eine weitere Spannungshalbwelle III induziert, deren Polarität der der zweiten Spannungshalbwelle II entgegengesetzt ist. Gerät auch aufgrund der Drehung 2 der Südpol S außerhalb der Bereiche der Schenkel 6, 7 des U-Kerns 5, verbleibt in diesem wegen der Magnetisierungshysterese eine Restmagnetisierung positiver Polarität. Nach einer vollständigen Umdrehung des Polrads 1 wiederholt sich der beschriebene Spannungshalbwellen-Zyklus I-II-III mit der Periode T von neuem. Wie eingangs dargelegt führt die dynamische Charakteristik des Zündsystems zu einer Verbreiterung der zweiten Halbwelle II und der dritten Halbwelle III, was sich in einem verspäteten Durchschreiten der Triggerschwelle $U_{Tr}$ mit der Verspätung s durch die Anfangsflanke der dritten Halbwelle III äußert.

Gemäß vorliegendem Ausführungsbeispiel liefert die Triggerspule L4 mit der ansteigenden Flanke der ersten Halbwelle I bei Durchschreiten der Triggerschwelle $U_{Tr}$ einen Zündimpuls über die Diode D2 und den Ausgangswiderstand R1 an den Steuereingang 10 des Schalters Thy. Handelt es sich um den erstmaligen Umlauf des Polrades 1, ist der Zündkondensator C1 noch nicht aufgeladen, und somit wird beim erstmaligen Vorbeilauf des Polrades 1 an der Spulenanordnung kein Funke ausgelöst, sondern es werden lediglich der Zündkondensator C1 und der Stromversorgungskondensator C3 aufgeladen (vgl. Diagramm b). Die nachfolgende zweite Halbwelle II negativer Polarität von der Triggerspule L4 schaltet über den Widerstand R2 des Spannungsteilers R2, R6 den pnp-Transistor T1 durch, so daß das Flip-Flop 17 zurückgesetzt wird (vgl. Diagramm c in Fig. 3). Dadurch gerät der invertierende Ausgang Q des Flip-Flops 17 auf positives Potential, so daß der Kurzschlußschalter mit dem Transistor T3 durchgeschalten wird (vgl. Diagramm e) aufgrund der zweiten Halbwelle II. Bei diesem Schaltzustand ist eine Ansteuerung des Schalters Thy zur Zündung 9 ausgeschlossen, insbesondere kann die nachfolgende dritte Halbwelle III von der Triggerspule L4 keine Zündung auslösen. Die dritte Halbwelle III betätigt jedoch das invertierende Schaltelement mit dem npn-Transistor T2 über die Durchlaß-Diode D2 und den Eingangsspannungsteiler R3, R4, wobei der vorher mit der zweiten Spannungshalbwelle II auf positives Potential angestiegene Takteingang CI des Flip-Flops 17 auf Massepotential gelegt wird. Mit der abfallenden Flanke der dritten Halbwelle III wird die durch den Spannungsteiler R3, R4 eingestellte Ansteuer-Spannung für das Schaltelement T2 unterschritten, welches daraufhin sperrt. Dadurch wird über den Kollektorwiderstand R5 des Schaltelements bzw. Transistors T2 positives Potential an den Takt-Eingang CI des Flip-Flops 17 gelegt, mithin eine ansteigende Flanke erzeugt (vgl. Diagramm d) für den Signalverlauf am Takteingang CI). Aufgrund der ansteigenden Taktflanke ändert der invertierende Ausgang Q des Flip-Flops 17 seinen vorher auf positivem Potential liegenden Pegel nach niedrigem Potential. Infolgedessen ist der Kurzschluß-Schalter T3 gegenüber Masse unterbrochen, und die innerhalb der nächsten Umdrehung erste Halbwelle I wird nicht kurzgeschlossen, sondern gelangt an den Steuereingang 10 des Schalters Thy. Das bedeutet, daß mit der ansteigenden Flanke der ersten Halbwelle I die Zündung 9 ausgelöst wird, und der Zündkondensator Cl über die Primärspule L2 des Zündtransformators 8 entladen wird. Der dabei an der (nicht gezeichneten) Zündkerze entstehende Zündfunken könnte das Flip-Flop 17 unerwünscht in einen anderen Zustand kippen. Dem wird - wie bereits beschrieben - durch den Rücksetzimpuls am Eingang R des Flip-Flops 17 aufgrund der Halbwelle II unmittelbar vor dem Setzen zur Zündungsfreigabe begegnet (vgl. insbesondere Diagramme a und c). Indem die Spannungsversorgung für das Kipp-Schaltwerk 16 mit dem Auftreten der drei Spannungshalbwellen I, II und III gekoppelt ist, sinkt diese während des Zeitraums der letzten Halbwelle III und der innerhalb der nächsten Umdrehung folgenden ersten Halbwelle I ab; dadurch wird das Kippschaltwerk inaktiviert und kann für Zeiten außerhalb der Spannungswellen I bis III keine Zündung verursachen.

Das Erfindungskonzept geht über das soeben beschriebene, spezielle Ausführungsbeispiel hinaus. So können die Funktionen der obigen Triggereinrichtung 11 und/oder des Kippschaltwerks 16 mit entsprechender Software realisiert werden, welche in einem Mikrorechner, insbesondere mit Flag-Register oder entsprechenden, reservierten Speicherzellen abläuft. Die Halbwellen aus der Triggerspule könnten dabei durch einen Analog-/Digital-Wandler vom Mikrorechner erfaßt werden. Zudem kann beim Magnetgenerator anstelle eines rotierenden Dauermagneten ein stationär angeordneter vorgesehen sein, während anstelle des Polrads ein Jochrad für magnetischen Rückschluß mit vorspringenden Zahnsegmenten verwendet ist.

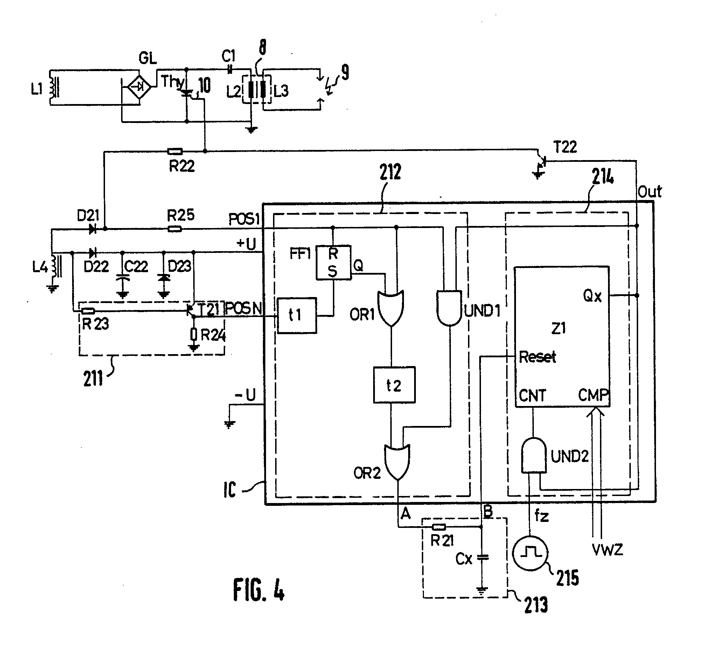

Gemäß der Schaltungsvariante nach Fig. 4 ist der Steuer-bzw. Betätigungseingang 10 des Zündschalters Thy mittelbar über den ohmschen Widerstand R22 und der dahinter geschalteten Diode D21 mit der einen Polklemme der vierten - der Triggerung der Zündung 9 dienenden - Triggerspule L4 verbunden, deren entgegengesetzte Polklemme auf Bezugspotential bzw. Masse gelegt ist. Aufgrund der nur positive Wechselspannungs-Halbwellen durchlassenden Diode D21 wird der Schalter Thy über seinen Betätigungseingang 10 nur bei gegenüber Bezugspotential positiv induzierten Halbwellen in der Triggerspule L4 angesteuert. Aus diesen Halbwellen wird ferner über eine weitere, positive Halbwellen durchlassende Diode D22 in Verbindung mit der nachgeordneten Parallelschaltung aus gepoltem Versorgungskondensator C22 und spannungsstabilisierender Zener-Diode D23 eine Versorgungsspannung +U für den nachgeschalteten integrierten Schaltkreis IC abgeleitet. Dieser liegt mit seinem weiteren Versorgungseingang -U auf gleichem Bezugspotential wie die Triggerspule L4 und weist für positive bzw. negative Wechselspannungs-Halbwellen aus der Triggerspule L4 jeweils einen Eingang POS1 bzw. POSN auf. Der Eingang POS1 ist über den ohmschen Widerstand R25 mit der Kathode der erstgenannten, positive Halbwellen durchlassenden Diode D21 verbunden. Gegenüber Bezugspotential bzw. Masse negativ induzierte Wechselspannungs-Halbwellen in der Triggerspule L4 werden mittels einer Invertierschaltung 211 invertiert bzw. umgepolt dem zweitgenannten Schaltkreis-Eingang POSN zugeführt. Die Invertierschaltung 211 wird im gezeichneten Beispiel aus dem im Emitterschaltung angeordneten pnp-Transistor T21 gebildet, der von der Signal-Polklemme der Triggerspule L4 über einen Widerstand R23 bei Auftreten negativer Halbwellen an seiner Basis angesteuert wird und diese kollektorseitig an den Eingang POSN weiterleitet; zur Erzeugung des entsprechenden Spannungsabfalls dient der Widerstand R24 zwischen Kollektor und Masse.

Wesentliche Funktionseinheiten es integrierten Schaltkreises IC sind das Anpassmodul 212 und der im Beispiel als Zeitgeber 214 dienende Vorwahlzähler Z1. Der positive Halbwellen-Eingang POS1 ist innerhalb des Anpassmoduls 212 dem Rücksetzeingang eines RS-Flipflops FF1 sowie den Eingängen eines ODER-Gatters OR1 und eines UND-Gatters UND1 zugeführt. Der Eingang POSN für (ursprünglich) negative Halbwellen führt über ein Laufzeitglied t1 zum Setz-Eingang S des RS-Flipflop FF1. Dessen Ausgang Q ist mit dem zweiten Eingang des bereits genannten ODER-Gatters OR1 verbunden. Sein Ausgang ist über ein weiteres Laufzeitglied t2 mit dem ersten Eingang eines weiteren ODER-Gatters OR2 verbunden. Der zweite Eingang dieses Gatters OR2 ist direkt mit dem Ausgang des genannten UND-Gatters UND1 verbunden, welches den Ausgang Qx des Vorwahlzählers Z1 mit dem Signal des Eingangs POS1 verknüpft.

Das zweitgenannte ODER-Gatter OR2 bildet für den integrierten Schaltkreis IC einen Ausgang A, der über ein externes Verzögerungsglied 213 - im Beispiel ein RC-Tiefpaß mit dem seriell angeordneten Widerstand R21 und dem gegen Masse nachgeschalteten Kondensator Cx - mit einem weiteren Eingang B des integrierten Schaltkreises IC verbunden ist. Der Eingang B dient der Erzeugung eines Start- bzw. Rücksetzsignals ("Reset") für den Zeitgebermodul 214 bzw. Vorwahlzähler Z1. Das Zeitgebermodul 214 umfaßt neben dem Vorwahlzähler Z1 noch ein zweites UND-Gatter UND2, mittels welchem die Impulsfolge entsprechend einer Zählfrequenz $f_z$ eines externen Taktgenerators 215 mit dem Ausgang Qx des Vorwahlzählers Z1 UND-verknüpft, und seinem Zähleingang CNT zugeführt wird. Dadurch wird der Zählvorgang gestoppt, wenn der Vorwahlzähler Z1 über seinen Eingang CMP ein positives Vergleichsergebnis mit einer extern eingestellten Vorwahlzahl VWZ feststellt und daraufhin sein Ausgangssignal Qx inaktiviert bzw. zurücksetzt. Durch die Vorwahlzahl VWZ kann eine Grobeinstellung des Vorwahlzählers Z1 erfolgen, indem dessen Zählerstufen festgelegt werden; die Feineinstellung ist durch Veränderung der Zählfrequenz $f_z$ aus dem Taktgenerator möglich.

Das Ausgangssignal Qx bildet auch den Sperrsignalausgang Out des integrierten Schaltkreises IC, welcher das Sperrschaltglied T22 - gebildet aus einem npn-Transistor in Emitterschaltung - ansteuert. Das Sperrschaltglied T22 legt bei Ansteuerung durch den aktivierten Sperrsignalausgang Out den Betätigungseingang 10 des Zündschalters Thy auf Masse bzw. Bezugspotential zwecks Zündverhinderung.

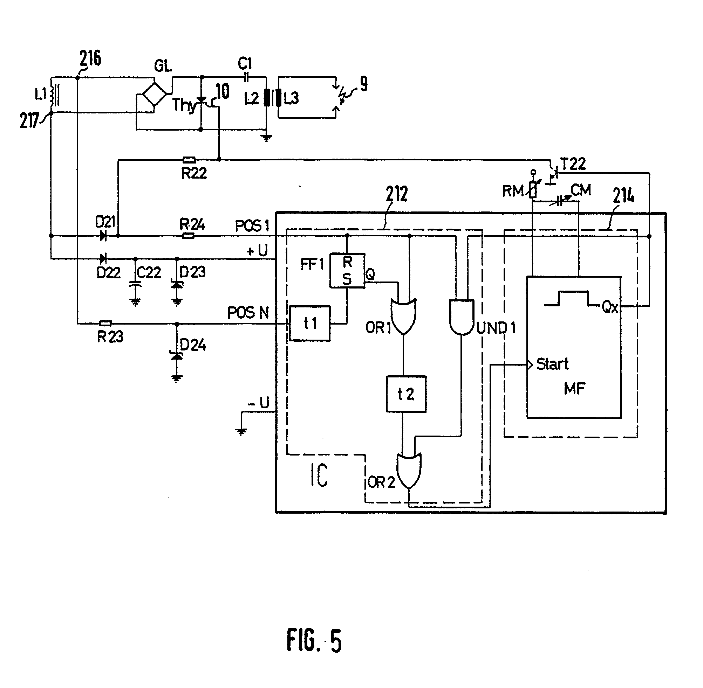

Die aus Figur 5 ersichtliche Schaltungsvariante ist gegenüber der nach Figur 4 wie folgt abgewandelt: Zum einen werden negative Spannungs-Halbwellen durch direkten Abgriff an einer Polklemme 216 der Ladespule L1 und nachfolgender Zuführung in gegenüber Bezugspotential positiver Stromrichtung an den entsprechenden Schaltkreis-Eingang POSN als positive Signale für das nachgeordnete Anpassmodul 212 gewonnen. Treten an der Abgriffstelle bzw. Polklemme 216 der Ladespule L1 Spannungshalbwellen umgekehrter Polarität auf, werden diese von der Diode D24 gegen Masse kurzgeschlossen. Mithin können der Transistor T21 und der Widerstand R24 gemäß Figur 4 weggelassen werden. Zum anderen ist der nach Figur 4 eingesetzte Vorwahlzähler Z1 mit UND-Gatter UND2 vorliegend durch ein Monoflop MF zur Bildung des Zeitgebermoduls 214 ersetzt. Das Monoflop MF ist extern mit einem Widerstand $R_M$ und einem Kondensator $C_M$ beschaltet, über deren Dimensionierung bzw. Verstellung die Dauer des nichtstabilen Zustands des Monoflops und mithin das vom Zeitgeber generierte Zeitintervall für die Aktivierung des Sperrsignalausgangs Out wählbar ist. Schließlich ist das externe Verzögerungsglied (vgl. Ziff. 213 in Figur 4) weggelassen und stattdessen der Ausgang des ODER-Gatters OR2 direkt dem Starteingang des Monoflops MF bzw. des Zeitgebers 214 zugeführt.

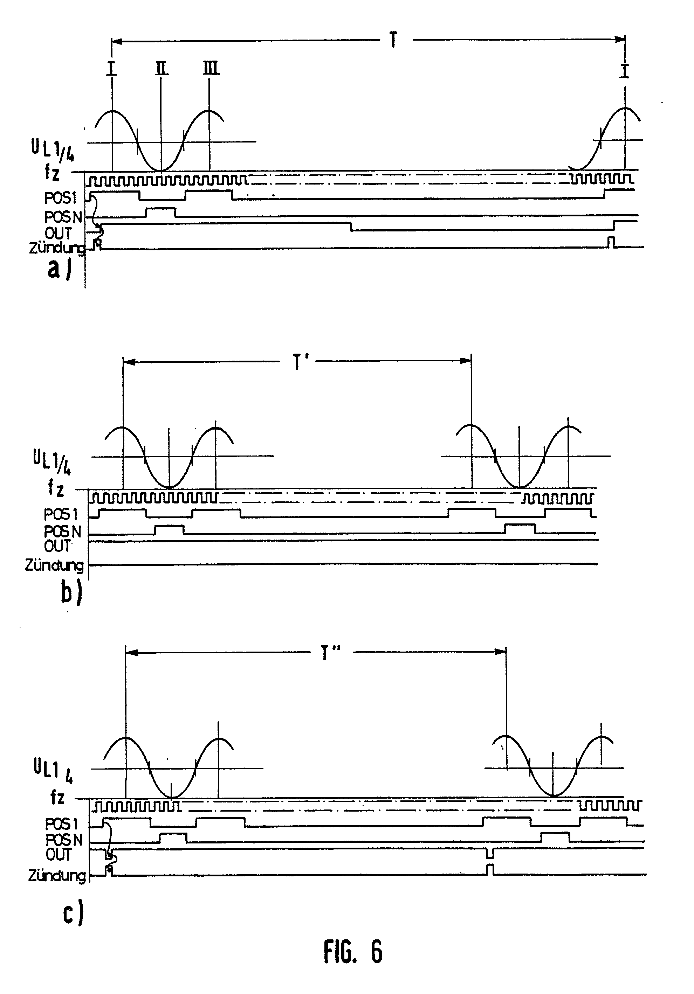

Nachfolgend wird die Funktionsweise der Schaltungsanordnung gemäß Figur 4 anhand der Signal/Zeit-Diagramme in Figur 6 näher erläutert.

Gemäß Diagramm 6a wird beim Vorbeibewegen des Nordpols N des Dauermagneten 3 am ersten mit der Spulenanordnung einschließlich der Triggerspule L4 bewickelten Schenkel 6 des U-Eisenkerns 5 (vgl. Fig. 1) unter anderem in der Ladespule L1 und der Triggerspule L4 eine Spannungshalbwelle I′ positiver Polarität induziert. Bewegt sich der Nordpol N nach Verlassen des Bereichs des ersten Schenkels 6 aufgrund der Drehung 2 am zweiten nicht bewickelten Schenkel 7 vorbei, gelangt zeitgleich der Südpol S in dem Bereich des ersten Schenkels 6. Dies führt zu einer vollständigen Ummagnetisierung des Eisenkerns 5, woraufhin die zweite Spannungshalbwelle II′ entgegengesetzter Polarität und höherer Amplitude entsteht. Verläßt der Nordpol N mit weiterer Drehung 2 den Bereich des zweiten Schenkels 7, den dann der Südpol S entsprechend magnetisiert, wird wieder eine Änderung des magnetischen Flusses durch die Spulenanordnung hervorgerufen; dies führt zur Induktion einer weiteren Spannungshalbwelle III′, deren Polarität der zweiten Spannungshalbwelle II′ entgegengesetzt ist. Aufgrund der notwendigen Ummagnetisierungen liegen die Spannungshalbwellen II′ und III′ in zeitlich weiteren Abständen auseinander als die Spannungshalbwellen I′ und II′ (nicht gezeichnet). Nach einer vollständigen Umdrehung des Polrads wiederholt sich der beschriebene Spannungshalbwellen-Zyklus I′-II′-III′ mit der Periode T von neuem.

Den jeweils positiven Spannungshalbwellen I′ und III′ entspricht die unipolare Pulsfolge am Schaltkreis-Eingang POS1, und der negativen Halbwelle II′ die gleichartige Pulsfolge am Schaltkreiseingang POSN. Beim Beispiel nach Diagramm a war beim Auftreten des ersten POS1-Impulses das Sperrsignal Out aufgrund des Ablaufs des Zeitgeber-Zeitintervalls bereits zurückgesetzt, das heißt logisch "0". Nun führt der erste POS1-Impuls - nachdem er das ODER-Gatter OR1, das Laufzeitglied t2 und das zweite ODER-Gatter OR2 durchlaufen hat - zum Rücksetzen und Starten des Zeitgebers 14 (vgl. Figur 4). Gemäß Diagramm 6a führt also dieser erste POS1-Impuls mit entsprechender Zeitverzögerung zum Setzen des Sperrsignals Out. Dadurch wird die vorher mit dem ersten POS1-Impuls ausgelöste Zündung unmittelbar unterbunden.

Gemäß Diagramm 6b hat sich die Drehzahl der Brennkraftmaschine erhöht, so daß die Wechselspannungshalbwellen $I'$, $II'$ und $III'$ mit gegenüber Diagramm 6a verkürzter Periodendauer $T'$ auftreten. Diese ist dabei so kurz, daß der Vorwahlzähler Z1 beim Abzählen der der Zählfrequenz $f_z$ zugrundeliegenden Zählimpulse aus dem Taktgenerator 215 die zur Drehzahlbegrenzung eingestellte Vorwahlzahl VWZ (vgl. Figur 4) beim Auftreten des ersten POS1-Impulses noch nicht erreicht hat, also noch läuft. Er wird dabei von den drei Halbwellen $I'$, $II'$, $III'$ über die Eingänge POS1 bzw. POSN, das Speicherglied FF1 gegebenenfalls mit Zeitglied tl und die Gatter OR1, OR2 mit Zeitglied t2 zurückgesetzt bzw. gestartet. Nach der dritten Halbwelle III beginnt der Vorwahlzähler Z1 wieder zu zählen. Infolgedessen herrscht für den Vorwahlzähler Z1 bei Überschreiten der Periodendauer $T'$ für den Wechslspannungszyklus $I'$-$II'$-$III'$ ständig Zählbetrieb vor, so daß das Sperrsignal Out die Zündung kontinuierlich verhindert.

Gemäß Diagramm 6c befindet sich die Brennkraftmaschine in einem Drehzahlbereich, der zwischen dem nach Diagramm 6a und dem nach Diagramm 6b liegt; es gilt also:
$T' < T'' < T$.

Dabei überschreitet das vom Zeitgeber erzeugte Zeitintervall die entsprechende Periode $T''$ um derart wenige Zählstufen, daß das Sperrsignal Out noch während des Andauerns des ersten POS1-Impulses einer Periode $T''$ zurückgenommen wird. Aufgrund des Verzögerungsglieds 213 aus Figur 4 wird dieser erste POS1-Impuls mit einer Zeitverzögerung zum Start- bzw. Reseteingang des Vorwahlzählers Z1 bzw. Zeitgebers 214 durchgeschleift. Der erste POSl1-Impuls kann den Zeitgeber 214 bzw. Vorwahlzähler Z1 über das UND-Gatter UND1 nicht sofort zurücksetzen, weil er über das Verzögerungsglied 213 verzögert wird. Erreicht der Vorwahlzähler dann seinen Endwert (Vorwahlzahl VWZ), während der erste POS1-Impuls noch andauert, wird das Sperrsignal Out inaktiv, und der Zündschalter Thy kann betätigt werden. Die Zündung erfolgte also eine bestimmte Zeit nach Eintreffen des ersten POS1-Impulses. Da dieses einen festen Bezug zur Kurbelwellenstellung der Brennkraftmaschine hat, und hier auch zweckmäßig der Zündzeitpunkt liegt, liegt gemäß Diagramm 6c eine spätverstellte Zündung vor. Die Zeitverzögerung durch das Verzögerungsglied 213 ist ausreichend, um die beim Auftreten des ersten POS1-Impulses begonnene Zündung 9 zur vollen Entfaltung kommen zu lassen, bis diese dann nach Ablauf der Zeitverzögerung durch (erneutes) Auftreten des Sperrsignals Out beendet wird.

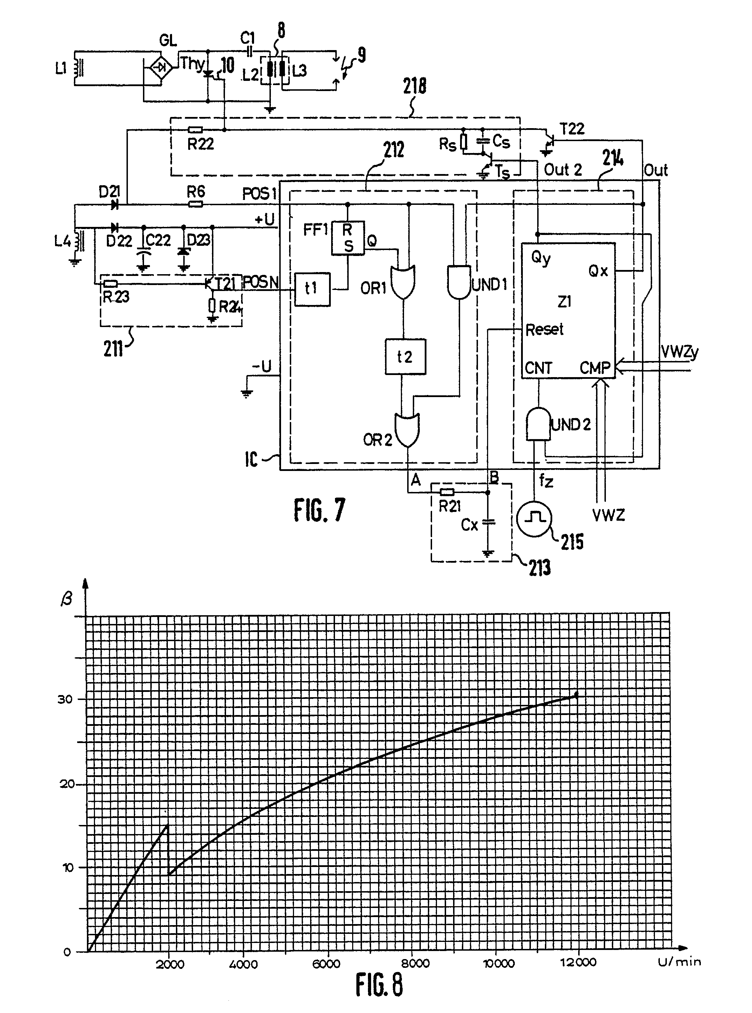

Die Schaltungsvariante nach Fig. 7 unterscheidet sich von der nach Fig. 4 dadurch, daß das Zeitgeber-Modul 214 in seinen Funktionen erweitert ist: Der im Beispiel zur Realisierung verwendete Vorwahlzäher Z1 steht über seinen Vergleichs-Eingang CMP mit einer weiteren extern eingestellten Vorwahlzahl VWZy in Wirkungsverbindung. Kommt es beim Abzählen der Impulse bzw. Zählfrequenz $f_z$ aus dem Taktgenerator 215 zu einem positiven Vergleichsergebnis bezüglich der zweiten Vorwahlzahl VWZy, wird dies durch Setzen eines zweiten Signalausgangs Qy des Zählerbausteins Z1 angezeigt; dies erfolgt analog dem Setzen des ersten Signalausgangs Qx bezüglich der ersten Vorwahlzahl VWZ. Das zweite Ausgangssignal Qy bildet das vom Zeitgeber-Modul 214 erzeugte Verzögerungssignal Out2, welches in gesetztem bzw. aktiven Zustand ein weiteres Verzögerungsglied 218 bestehend aus den Widerständen $R_2$, $R_s$, dem Kondensator $C_S$ und dem Schalttransistor $T_S$ ansteuert bzw. aktiviert. Zu diesem Zweck ist der Verzögerungssignal-Ausgang Out2 mit der Basis des Schalttransistors $T_S$ verbunden. Wird dieser vom Verzögerungssignal Out2 angesteuert, schaltet er die Parallelschaltung aus dem Widerstand $R_S$ und dem Kondensator $C_S$ nach Masse. Der Kondensator $C_S$ bildet dann zusammen mit dem Widerstand $R_{22}$ einen RC-Tiefpaß, über welchen von der Triggerspule L4 ausgehende und durch die Diode D21 gelangende, positive Wechselspannungshalbwellen verzögert zum Betätigungseingang 10 des Zündschalters bzw. Thyristors Thy gelangen. Dadurch wird die Entladung des Speicherkondensators C1 und die dadurch ausgelöste Zündung 9 entsprechend der Zeitkonstante des RC-Tiefpasses bzw. Verzögerungsgliedes 218 verspätet bewirkt.

Dies kann vorteilhaft für Stabilisierung der Leerlaufdrehzahl der Brennkraftmaschine ausgenutzt werden, wenn die Vorwahlzahl VWZy bezüglich des zweiten Zählerausgangs Qy größer ist als die Vorwahlzahl VWZ bezüglich des ersten Zählerausgangs Qx. Es gilt also
VWZy > VWZ.

Damit aber aufgrund dieses Verhältnisses der Zählerbaustein Z1 beim Erreichen der kleineren Vorwahlzahl VWZ nicht, wie nach Fig. 4, angehalten wird, sondern die spezifizierte Erzeugung des Verzögerungssignals Out2 durch den zweiten Zählerausgangs Qy gewährleistet bleibt, ist dieser mit der Zählfrequenz fz aus dem Taktgenerator 215 über das Gatter UND2 logisch UND-verknüpft.

Die Wirkungsweise der Schaltungsvariante nach Fig. 7 wird weiter anhand von Fig. 8, die die Zündwinkel-Frühverstellung ß in Grad über die Drehzahl in Umdrehungen pro Minute zeigt. Hier ist die Vorwahlzahl VWZy so eingestellt, daß das Verzögerungssignal Out2 bis zu einer Maschinendrehzahl von etwa 2000 U/min. auf "low" liegt, d. h. inaktiv ist. Bei etwa 2000 U/min. wird der zweite Ausgang des Zählers Z1 "active high", also gesetzt, und das weitere Verzögerungsglied 218 mittels des durchgeschalteten Schalttransistors $T_s$ eingeschaltet. Dies erzeugt einen Einbruch der Zündverstellkurve bei 2000 U/min., der der Stabilisierung der Leerlaufdrehzahl dient. Die so verminderte Frühverstellung der Zündung steigt mit zunehmender Drehzahl weiter an, bis 12 000 U/min. erreicht sind. Diese Drehzahl entspricht dem Wert der ersten Vorwahlzahl VWZ, bei dessen Erreichen die Zündung 9, wie oben erläutert, gesperrt wird. Die zweite Vorwahlzahl VWZy kann auch durch Einsatz interner Teilerstufen innerhalb des Zählerbausteins Z1 realisiert werden. Dadurch kann ein gesonderter Eingang für die zweite Vorwahlzahl entfallen.

## Ansprüche

1. Zündverfahren für Brennkraftmaschinen, insbesondere in Rasenmähern oder Kettensägen, bei dem ein Magnetgenerator für jede Maschinen-Umdrehung (T) eine Mehrzahl Wechselspannungs-Halbwellen (I, II, III) induziert, mittels welcher ein Energiespeicherelement (C1) aufgeladen und von einem Schaltglied (Thy) über die Primärspule (L2) eines Zündtransformators (L2, L3) entladen wird, dadurch gekennzeichnet, daß das Schaltglied (Thy) betätigt wird, wenn die innerhalb jeder Umdrehung (T) ansteigende Flanke der ersten Halbwelle (I) eine Triggerschwelle ($U_{Tr}$) errreicht.

2. Zündverfahren nach Anspruch 1, dadurch gekennzeichnet, daß wenigstens eine der der ersten Halbwelle (I) nachfolgenden Halbwellen (II, III) in Bezug auf die Betätigung des Schaltglieds (Thy) gesperrt wird.

3. Zündverfahren nach einem der vorhergehenden Ansprüche, gekennzeichnet durch ein Flag, welches mit der letzten Halbwelle (III) innerhalb jeder Umdrehung (T) derart gesetzt wird, daß es die Freigabe der Zündung (9) signalisiert.

4. Zündverfahren nach Anspruch 3, dadurch gekennzeichnet, daß das Flag mit wenigstensder zweiten Halbwelle (II) jeder Umdrehung (T) zwecks Sperren der Zündung (9) zurückgesetzt wird.

5. Kondensator-Zündanordnung für Brennkraftmaschinen, mit einem drehzahlabhängig Wechselspannungen induzierenden Magnetgenerator und einer die Wechselspan nungen (I, II, III) abtastenden Triggervorrichtung (11) zum Betätigen eines den Zündkondensator (C1) über die Primärspule (L2) eines Zündtransformators (L2, L3) entladenden Schalters (Thy), insbesondere zur Durchführung des Verfahrens nach einem der vorherigen Ansprüche, gekennzeichnet durch ein bistabiles Kippschaltwerk (16), welches aufgrund der letzten Wechselspannungs- Halbwelle (III) innerhalb jeder Maschinen-Umdrehung (T) in einen Zustand zur Freigabe der Betätigung des Schalters (Thy) während der ersten Halbwelle (I) der nächsten Umdrehung gekippt wird.

6. Zündanordnung nach Anspruch 5, dadurch gekennzeichnet, daß das Kippschaltwerk (16) mit Ablauf bzw. der Endflanke der letzten Halbwelle (III) in den Freigabezustand gesetzt wird.

7. Zündanordnung nach Anspruch 5 oder 6, dadurch gekennzeichnet, daß das Kippschaltwerk (16) aufgrund der innerhalb jeder Umdrehung (T) zweiten (II) und gegebenenfalls folgenden Halbwellen gleicher Polarität in seinen ursprünglichen Ausgangszustand zurückgekippt wird und dabei die Betätigung des Schalters (Thy) sperrt.

8. Zündanordnung nach einem der Ansprüche 5 bis 7, dadurch gekennzeichnet, daß das Kippschaltwerk (16) ein einflankengetriggertes Toggle-Flip-Flop (17) aufweist, das innerhalb jeder Umdrehung (T) aufgrund der zweiten (II) und gegebenenfalls folgender Halbwellen gleicher Polarität zurückgesetzt wird, und auf dessen Takteingang (CI) die letzte (III) und gegebenenfalls vorausgehende Halbwellen (i) gleicher Polarität einwirken.

9. Zündanordnung nach einem der Ansprüche 5 bis 8, dadurch gekennzeichnet, daß die Stromversorgung (UB) des Kippschaltwerks (16) von der ersten und gegebenenfalls folgenden Halbwellen (I, II, III) abhängt.

10. Zündanordnung nach einem der Ansprüche 5 bis 9, dadurch gekennzeichnet, daß das Kippschaltwerk (16) im zurückgekippten Ausgangszustand einen Kurzschlußschalter (T3) zur Unterdrückung von induzierten Trigger-Halbwellen gegenüber dem Schalter (Thy) ansteuert.

11. Zündanordnung nach Anspruch 10, dadurch gekennzeichnet, daß dem Kippschaltwerk (16) und dem Kurzschluß-Schalter ein Verzögerungsglied (R8, C4) zwischengeschaltet ist.

12. Zündanordnung nach einem der Ansprüche 5 bis 11, dadurch gekennzeichnet, daß der Magnetgenerator ein mit der Maschinenumdrehung gekoppeltes Magnet-Polrad (1) mit tangential versetzten Polen (N, S) und eine damit zusammenwirkende, stationäre Spulenanordnung (L1 bis L4) mit ferromagnetischem Eisenkern (5) aufweist.

13. Zündanordnung nach Anspruch 12, dadurch gekennzeichnet, daß der Eisenkern (5) zwei zum Polrad gerichtete Schenkel (6, 7) aufweist, von denen einer (6) von der Spulenanordnung (L1 bis L4) einschließlich einer Lade- und einer Triggerspule (L1, L4) umgeben ist.

14. Zündanlage für Brennkraftmaschinen, insbesondere umfassend ein Zündverfahren und/oder eine Zündanordnung nach einem der vorhergehenden Ansprüche, mit einem Magnetgenerator (Fig. 1), der abhängig von der Maschinen-Drehstellung eine Lade-Wechselspannung ($I'$ -$III'$) für ein Energiespeicherelement (C1) induziert, das von einem synchron zu der Wechselspannung ($I'$ -$III'$) betätigten Zündschalter (Thy) zum Auslösen der Zündung (9) entladen wird, gekennzeichnet durch ein Zeitgeber-Modul (214), das auf die Wechselspannung ($I'$ - $III'$) mit der Erzeugung eines Betätigungs-Sperrsignals (Out) für den Zündschalter (Thy) für die Dauer eines Zeitintervalls ($f_z$, VWZ) anspricht, welches einer Drehzahl-Obergrenze für die Brennkraftmaschine entspricht.

15. Zündanlage nach Anspruch 14, dadurch gekennzeichnet, daß der Zeitgeber (214) als Vorwahlzähler (Z1), Zeitschalter oder Monoflop (MF), die jeweils mittels der Wechselspannung ($I'$ - $III'$) in ihren Ausgangszustand rücksetzbar sind, oder als programmierbarer Zähler und/oder Software-Routine eines die Wechselspannung-sensierenden Mikrocomputers realisiert ist.

16. Zündanlage nach Anspruch 14 oder 15, gekennzeichnet durch ein Anpaßmodul (212), mittels welchem pro Maschinenumdrehung eine oder mehrere WechselspannungsHalbwellen ($I'$, $II'$, $III'$) - gegebenenfalls nach deren Gleichrichtung oder Invertierung (211), - dem Zeitgeber (214) zu dessen Rücksetzen (Reset) selektiert zugeführt werden.

17. Zündanlage nach Anspruch 16, gekennzeichnet durch ein oder mehrere, jeweils einer Halbwelle ($I'$, $II'$, $III'$) zugeordnete Laufzeitglieder ($t_1$, $t_2$) die eine Zeitverzögerung entsprechend der Mindest-Betätigungszeit des Zündschalters (Thy) realisieren.

18. Zündanlage nach Anspruch 17, dadurch gekennzeichnet, daß pro Maschinen-Umdrehung (T) wenigstens eine Halbwelle ($I'$, $II'$, $III'$), vorzugsweise die erste ($I'$), dem Zeitgeber (214) zusätzlich unter logischer UND-Verknüpfung (UND1) mit dessen Sperrsignal-Ausgang (Out) zugeführt wird.

19. Zündanlage nach einem der Ansprüche 16 - 18, mit mehr als zwei induzierten Halbwellen ($I'$, $II'$, $III'$) pro Maschinen-Umdrehung (T), gekennzeichnet durch ein Speicherelement, beispielsweise Flipflop (FF1), für ein dem Zeitgeber (214) zum Rücksetzen (Reset) zugeführtes Merksignal derart, daß es von einer Halbwelle ($II'$) geladen und einer anderen vorausgehenden und/oder nachfolgenden Halbwelle ($I'$, $III'$) gelöscht wird.

20. Zündanlage nach einem der Ansprüche 16 - 19, dadurch gekennzeichnet, daß das Anpaßmodul (12) - gegebenenfalls einschließlich der Laufzeitglieder ($t_1$, $t_2$) des UND-Gatters (UND1) und/oder des Speicherelements (FF1) - mit dem Zeitgeber (214) baulich zu einem integrierten Schaltkreis (IC) zusammengefaßt ist.

21. Zündanlage nach einem der Ansprüche 16 - 20, dadurch gekennzeichnet, daß dem Anpaßmodul (212) Wechselspannungs-Halbwellen ($I'$, $II'$, $III'$) zugeführt werden, die von sowohl dem einen Pol (217) als auch dem entgegengesetzten Pol (216) einer Induktionsspule (L1) abgegriffen sind.

22. Zündanlage nach einem der Ansprüche 16 - 20, dadurch gekennzeichnet, daß dem Anpaßmodul (212) gegenüber Bezugspotential negative Wechselspannungs-Halbwellen ($II'$) über einen pnp-Transistor in Emitterschaltung (211, T21) zugeführt werden.

23. Zündanlage nach einem der Ansprüche 14 - 22, dadurch gekennzeichnet, daß zur Stromversorgung des Zeitgeber - und/oder gegebenenfalls Anpaßmoduls (214, 212) oder integrierten Schaltkreises (IC) ein weiteres Energiespeicherelement (C2$_2$) angeordnet ist, das über die induzierte Wechselspannung ($I'$-$III'$) aufgeladen wird.

24. Zündanlage nach einem der Ansprüche 14 - 23, gekennzeichnet durch ein dem Zeitgeber (214) nachgeschaltetes Sperrschaltglied (T22), das bei Ansteuerung durch das Sperrsignal (Out) den Betätigungseingang (10) des Zündschalters (Thy) gegen Masse kurzschließt.

25. Zündanlage nach einem der Ansprüche 14 - 24, dadurch gekennzeichnet, daß dem Ansprech-, gegebenenfalls Rücksetzeingang (Reset, Start) des Zeitgebers (214) ein Verzögerungsmodul (213), beispielsweise RC-Tiefpaß, unmittelbar vorgelagert bzw. vorgeschaltet ist, dessen realisierte Verzögerungszeit einer Spätverstellung des Zündzeitpunkts (Fig. 6c) entspricht, wenn die Maschine nahe unterhalb ihrer Drehzahl-Obergrenze betrieben wird.

26. Zündanlage nach einem der Ansprüche 14 - 25, gekennzeichnet durch einen Impuls- oder Taktgenerator (215) als Zeitreferenz für das Zeitgeber-Modul (214), dessen Takt- oder Impulsausgang ($f_z$) mit dem Sperrsignal (Out, Out2) logisch UND-verknüpft (UND2) einer Zähl einrichtung (Z1, CNT) des Zeitgeber-Moduls (214) zugeführt wird.

27. Zündanlage nach einem der Ansprüche 14 - 26, dadurch gekennzeichnet, daß das Zeitgeber-Modul (214) auf die Wechselspannung ($I'$-$III'$) mit der Erzeugung eines separaten Verzögerungssignals (Out2, Qy) zur verzögerten Betätigung des Zündschalters (Thy) für die Dauer eines zweiten längeren Zeitintervalls (VWZy, $f_z$) anspricht, das einer Drehzahl-Untergrenze, vorzugsweise der Leerlaufdrehzahl (Fig. 8), der Maschine entspricht.

28. Zündanlage nach Anspruch 27, gekennzeichnet durch ein vom Verzögerungssignal aktivierbares Verzögerungsglied (217), vorzugsweise RC-Tiefpaß, über das die induzierte Wechselspannung ( ́I-III ́) dem Betätigungseingang (10) des Zündschalters (Thy) zu dessen Triggerung zugeführt wird.

29. Zündanlage nach Anspruch 26 und einem der Ansprüche 27 oder 28, dadurch gekennzeichnet, daß der Takt-oder Impulsausgang (f$_z$) einzig mit dem Verzögerungssignal (Out2) UND-verknüpft ist.

**FIG. 1**

FIG. 2

EP 0 411 292 A2

FIG. 3

FIG. 4

FIG. 5

FIG. 6

FIG. 7

FIG. 8